# EUROPEAN PATENT APPLICATION

(11) **EP 1 213 855 A1**
(43) Date of publication of application: **12.06.2002**
(21) Application number: 00310931.1
(22) Date of filing: 08.12.2000
(51) Int. Cl.: H04B 7/26

(54) **Frame structure for TDD telecommunication systems**

(71) Applicant: LUCENT TECHNOLOGIES INC., Murray Hill, New Jersey 07974-0636 (US)
(72) Inventor: Briand, Jacques, 22220 Minihy-Treguier (FR); Falaki, Hamid Reza, Swindon, Wiltshire SN5 5AA (GB); Karimi, Hamid Reza, Swindon, Wiltshire SN5 5BJ (GB); Le Goff, Yvon, 22700 Perros-Guirec (FR); Soulabail, Roland, 22300 Lannion (FR)
(74) Representative: Buckley, Christopher Simon Thirsk

(57) **Abstract**

In order to double the size of cells for a UMTS/ UTRAN system operating in time division mode (TDD) from 3.75 km to 7.5 km, the node B station defines the guard period (66) for a downlink slot followed by an adjacent uplink slot to be longer than the guard period (68) for an uplink slot followed by an adjacent downlink slot, whereby the cell size is extended. Each UE adjusts its timing in reponse to timing deviation signals (64) transmitted at the start of each downlink bust, so as to transmit an uplink burst which arrive at the Node B, at the beginning of the next uplink slot.

## Description

The present invention relates to a frame structure for cellular telecommunications systems, in particular Time Division (TD) systems.

Cellular Mobile Systems are usually designed in cell sizes having a single base station which transmits and receives signals for mobile stations within the cell; in other words the cell has a single source of transmit and receive to the rest of the network. The cell size is constrained by many physical parameters, e.g. - available power, density of mobile stations, but for Time Division (TD) systems a significant parameter in determining cell size is the time delay for the transmit signal to reach a mobile station and for its response to be received by the controlling base station. This is because if the time delay is excessive, an uplink timeslot may, for example, overlap with a following downlink timeslot, creating interference.

The Universal Mobile Terrestrial System (UMTS) Radio Access Network (UTRAN) has technical specifications which specify two types of air interface, namely Frequency Division Duplex (FDD) and Time Division Duplex (TDD). The TDD option is further divided into two bands of chip rate operation, one with 3.84 Mcps (Mega Chip Per Second) and the other with 1.28 Mcps. Because of the above mentioned problem of time delays creating interference, it is necessary to specify guard periods between consecutive slots, and this introduces severe limitations on the size of cell for TDD operation. Thus, for wideband TDD at 3.84 Mcps, the maximum cell size or radius is 3.75 kilometres, whereas for narrow band TDD at 1.28 Mcps, the maximum cell size or radius is 3 x 3.75 kilometres.

3GPP TS 25.221 specifies physical channels between User Equipment (UE) (mobile) and Node B (base station) as a sequence of radio frames each ten milliseconds long, each radio frame being divided into fifteen timeslots of a length 2560 x T_{c}, the chip period.

3GPP TS 25.224 specifies synchronisation procedures and timing advance procedures. During the cell search procedure, a UE determines the frame synchronisation of a cell from the frame timing used by the cell. The UE can then synchronise itself to the frame timing and report to the Node B that synchronisation has been achieved (Section 4.4). During use within the cell, the UE transmission may be adjusted with timing advance (Section 4.3).

Despite the attention paid to synchronisation and retiming procedures, the guard periods between consecutive slots introduce severe limitations on the cell size, and the small cell size necessitated with TDD operation of UTRAN has been a significant factor in hindering adoption of TDD by the telecommunications market.

### Summary of the Invention

It is an object of the invention to provide a method and means for extending the maximum cell size for TDD operation of UTRAN, whilst working within existing standards.

The present invention is applicable to all types of cellular telecommunications systems, and for the purposes of the present specification, a **main station** having an associated cell includes a Node B in UMTS and a base station (BS) in GSM, and a **subsidiary station** refers to a UE in UMTS and a mobile station (MS) in GSM.

The present invention recognises that whereas the guard period has previously been equally divided with a constant guard period at the end of each timeslot, an unequal division of guard periods between timeslots can provide a means of extending maximum cell size.

The present invention recognises that whereas the existing standards show guard periods of equal length at the end of each slot in a TDD system, it is possible at the main station to "borrow" some or all of the guard period between an uplink slot and a following downlink slot, and "add" it to the guard period between a preceding downlink slot and the next following uplink slot. In this way a large time period is provided to enable the signal to propagate from the Node B to the UE, and back to the Node B. In this way, the cell size can be extended, up to a maximum of double the previous cell size. Nevertheless, it is possible to stay within the specified standards since the total guard period of the timeslots in a single frame remains the same.

A particular advantage of the present invention is that it may be implemented at the Node B or at a controlling Node in order to vary the guard periods within the timeslot structure defined in the Node B. The UE within the cell however, are unchanged, since they are merely required to follow the received signals from the Node B.

To this end, the timing deviation signal specified in 3GGP TS 25.225, Section 5.2.8 is placed at the beginning of a downlink slot, in order that the timing of the UE is adjusted at the beginning of each downlink slot so that there is no error in transmitting the following uplink slot.

Accordingly, the present invention provides in a first aspect a cellular telecommunications time division system, wherein a main station for a cell provides a defined frame structure, wherein each frame comprises a plurality of timeslots, each timeslot having at the end a guard period, the main station having means for transmitting data bursts within each time slot, and means for transmitting timing deviation signals to subsidiary stations within the cell,
each subsidiary station within the cell of the main station having means for adjusting its timing to received timing deviation signals, for adjusting the timing of uplink transmission bursts, characterised in that:
the guard period at the main station for a downlink slot followed by an adjacent uplink slot is longer than a guard period for an uplink slot followed by an adjacent downlink slot, whereby the cell size may be extended.

In a second aspect, the invention provides apparatus for a cellular telecommunications time division system, including a main station for a cell including means providing a defined frame structure, wherein each frame comprises a plurality of timeslots, each timeslot having at the end a guard period, the main station including means for transmitting data bursts within a time slot, and means for transmitting timing deviation signals to subsidiary stations within the cell,
at least one subsidiary station within the cell of the main station having means for adjusting its timing to received timing deviation signals, for adjusting the timing of uplink transmission bursts, characterized in that
said means providing a defined frame structure is arranged to provide a guard period at the main station for a downlink slot followed by an adjacent uplink slot which is longer than a guard period for an uplink slot followed by an adjacent downlink slot, whereby the cell size may be extended.

In a third aspect, the invention provides a method of time division access in a cellular telecommunications system, wherein a main station for a cell provides a defined frame structure, each frame comprises a plurality of timeslots, each timeslot having at the end a guard period and the main station transmitting timing deviation signals to subsidiary stations within the cell,
each subsidiary station within the cell adjusting its timing to received timing deviation signals, and adjusting the timing of uplink transmission bursts, and characterised in that
the main station defines the guard period for a downlink slot followed by an adjacent uplink slot to be longer than the guard period for an uplink slot followed by an adjacent downlink slot, whereby the cell size is extended.

As preferred, timing deviation signals are transmitted from the main station at the beginning of each downlink slot, so that the subsidiary station can adjust its timing. In some applications, the timing deviation signals may be transmitted less often. As preferred, the subsidiary station computes timing taking into account the timing deviation signal from the main station, and makes uplink transmissions accordingly.

### Brief Description of the Drawings

A preferred embodiment of the invention will now be described with reference to the accompanying drawings, wherein:
**Figure 1** is a conceptual block diagram of a UTRAN network;
**Figure 2** is a conceptual diagram of layers 1,2 and 3 of the UTRAN network;
**Figure 3** is a diagram of a timeslot in a TDMA system;
**Figure 4** is a definition of a timing deviation signal;
**Figure 5** is a conceptual diagram indicating operation of an existing TDD system, and in particular how the guard periods operate to prevent interference;
**Figure 6** is a schematic view of the guard period system of the present invention; and
**Figure 7** is a schematic diagram of a preferred embodiment of the invention.

### Description of the Preferred Embodiment

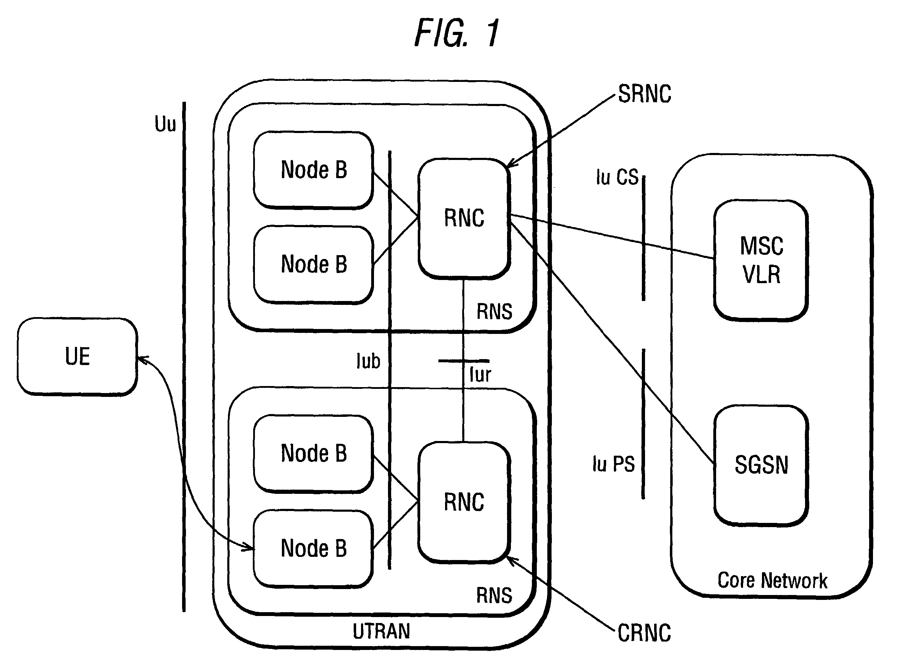

Referring to **Figure 1,** this shows a schematic block diagram of a UTRAN system comprising user equipment UE coupled over an air interface Uu a Node B of the UTRAN. Each Node B controls a respective cell of a nominal 3.75km radius. As shown, each radio link sub-system RNS has a plurality of Nodes B controlled by a radio network controller RNC, which may be a serving RNC (SRNC), or a controlling RNC (CRNC). The UTRAN is coupled to a core network comprising a mobile services switching centre/ visitor location register MSC/VLR, and a serving GPRS (general packet radio service) support node SGSN.

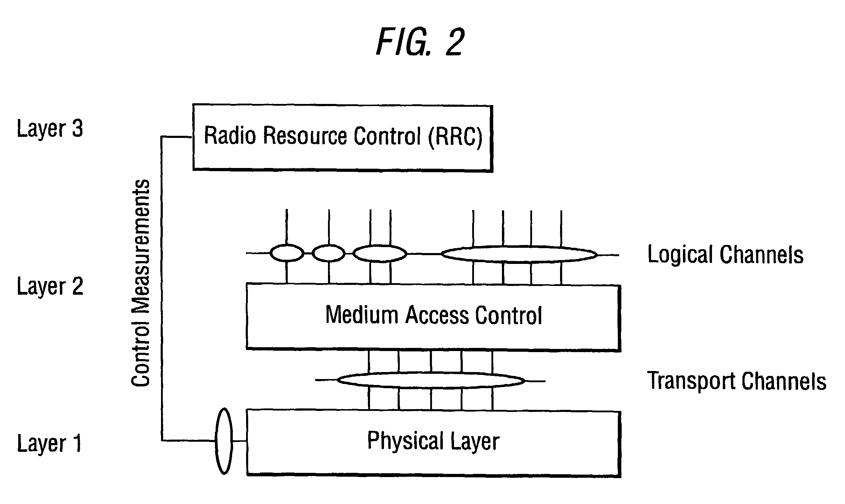

**Figure 2** shows various logical layers of the network of Figure 1, the base layer being layer 1, the physical hardware layer. Layer 2, provides a medium access control with data being transferred to the physical layer over transport channels. Data generated from the radio resource control (RRC) forming layer 3, is transferred to the medium access control over logical channels. The radio resource control also provides control and measurements to signals to the physical layer, Layer 1.

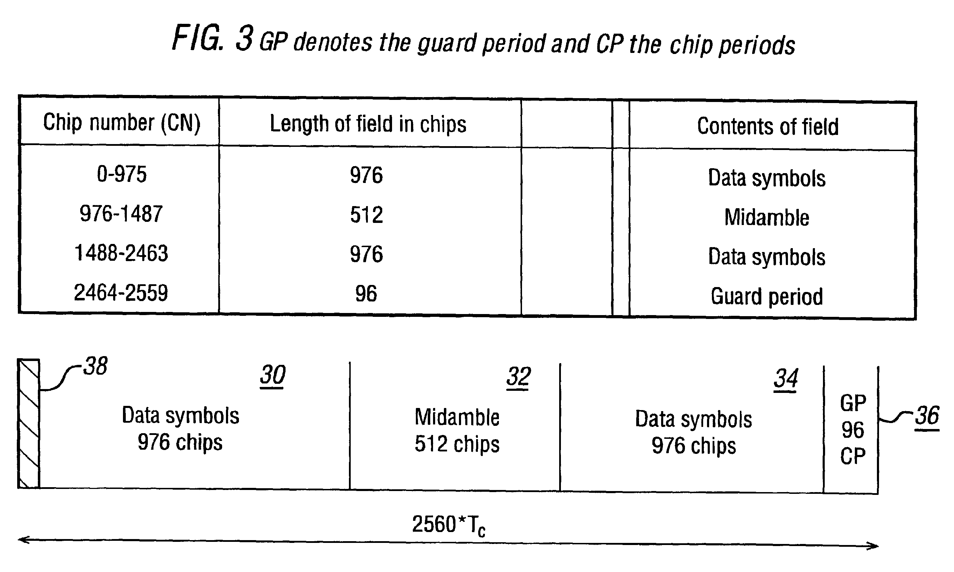

Referring to **Figure 3,** this shows, for the TDD operation of UTRAN, a typical timeslot of a timeframe as comprising an initial data part 30, a midamble part 32 for control signals, etc, a second data part 34 and a guard period 36. The total length of the slot is 2560 chip periods, the length of the guard period being 96 chip periods. However, in the preferred form of the present invention, the guard period 36 is a variable quantity. In addition, in accordance with the invention at the beginning of the timeslot, for a downlink timeslot, a control signal 38 is provided which represents the measured timing deviation as determined by the Node B, and represents a value which the UE on receiving the downlink signal will adjust its timing reference.

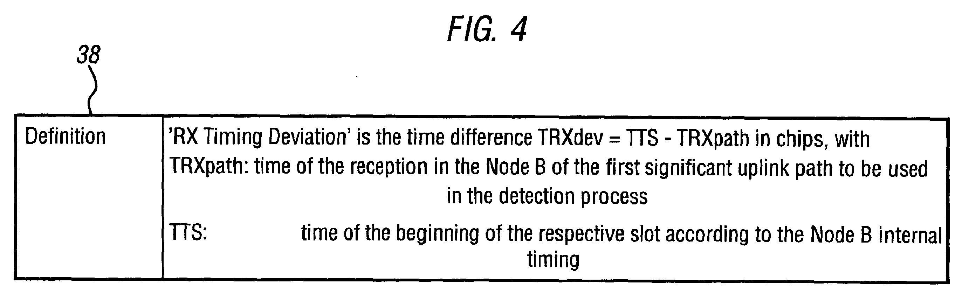

3GPP TS 25.224 specifies synchronisation procedures and timing advance procedures. During the cell search procedure, a UE determines the frame synchronisation of a cell from the frame timing used by the cell. The UE can then synchronise itself to the frame timing and report to the Node B that synchronisation has been achieved (Section 4.4). During use within the cell, the UE transmission may be adjusted with timing advance (Section 4.3). UTRAN will continuously measure the timing of a transmission from the UE and send the necessary timing advance value. On receipt of this value, the UE adjusts the timing of its transmissions. 3GPP TS 25.225 specifies the measurements for timing advance (Section 4.5). The UTRAN measures "received timing deviation", i.e. - the time difference of the received uplink transmission in relation to the UTRAN timeslot structure, i.e. - in relation to the ideal case where an uplink transmission has zero propagation delay. **Figure 4** shows the definition of the timing deviation signal 38 transmitted to the UE, to be used by the UE for timing advance calculations, according to Sec. 5.2.8, 3GPP TS 25.225.

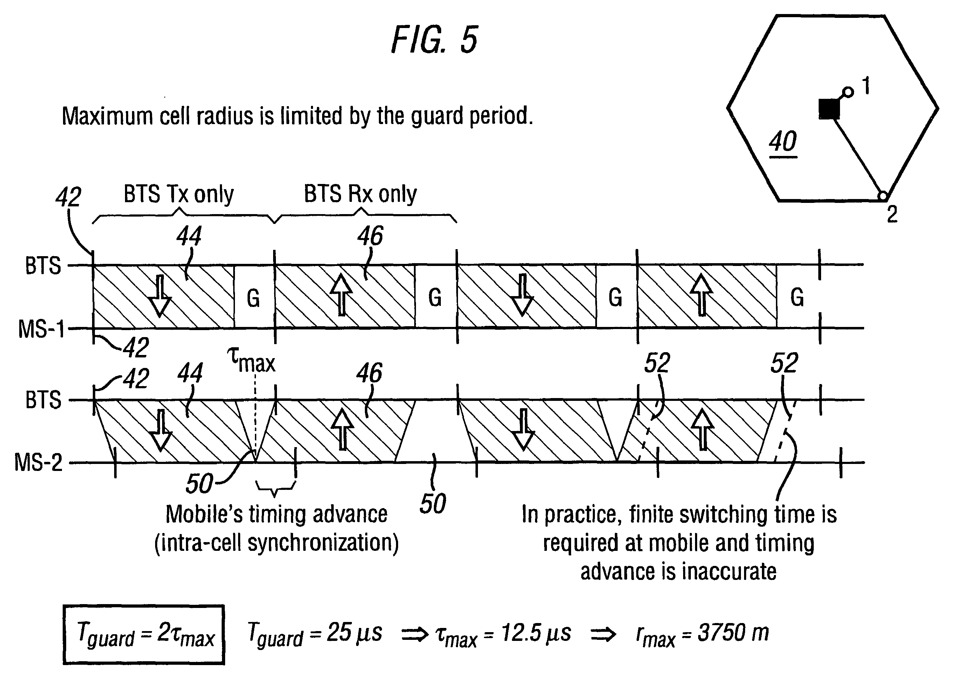

Referring to **Figure 5,** this shows conceptually the use of the guard period in existing systems. In the upper timing diagram for a subsidiary station MS-1 at position 1 in the cell 40, there is no significant propagation delay and therefore the main transmitting station BTS and the subsidiary station MS-1 have no propagation delay between them. Therefore, there is no timing advance required for MS-1, and station MS-1 computes a time period for the uplink burst which is coincident with the uplink slot of the main station BTS, in order to preserve synchronisation.. Both BTS and MS-1 have time periods G between bursts.

However, for the lower timing diagram which represents the station MS-2 at position 2 in the cell, at the outer edge of the cell, there is a significant timing delay. Main station BTS transmits timing deviation signals 42 to advance the timing of station MS-2 in a downlink slot 44 in order to compensate for the propagation delay. The subsidiary station starts transmitting an uplink burst 46 after a period determined by the length of the downlink slot and the timing advance. This results as shown in the lower diagram as the uplink burst being initiated immediately at the end of the downlink burst as received at the mobile station. At the main station, the burst is received at the start of the uplink slot. The guard period G at the BTS is the same between downlink and following uplink slot as that between an uplink slot and a following downlink slot. However, at the mobile station the period 50 between downlink and uplink bursts varies between almost zero and the value of the guard period G at the BTS.

In practice, there will in addition be a finite switching time at the mobile station which will cause an inaccuracy in the timing advance as shown at 52.

The UTRAN TDD frame structure consists of 15 Radio Frequency (RF) burst of totalling 10ms. The air interface LTTRAN TDD usually uses a guard period of 96 chips for timing advance to allow for a signal return delay. This corresponds to:
96 chips divided by 3.84 Mcps = 25 micro seconds
   for signals travelling at speed of light 300,000 km/s this means
300,000 km/s multiplied by 25 micro seconds = 7.5 km maximum returned signal path
   Thus:
7.5 km divided by 2 = 3.75 km maximum distance between the subsidiary station and main station.

In general the guard period is equally divided between the uplink and downlink within the frame structure. This is a common practice in prior wireless systems. This invention proposes an unequal division between the uplink and downlink, by creating a longer guard period for downlink (DL) delay and a second shorter guard period for the uplink (UL) delay. To take benefit of the second guard period, the uplink should be delayed with fixed time lower than or equal to the prior guard period G. With this method, the User Equipment (UE) is aligned at the beginning of the timeslot plus a maximum of 96 chips which represents the guard period. As preferred, the system time reference is always given by the first bit of the downlink signal burst.

This can be a special mode of operation, in addition to other modes recommended in the technical specifications. With this solution the cell size effectively doubles its original design and in case of UTRAN TDD 3.84 Mcps extends to:
96 chips multiplied by 2 and divided by 3.84 Mcps = 50 micro seconds
   for signals travelling at speed of light 300,000 km/s this means
300,000 k/ms multiplied by 50 micro seconds = 15 km maximum returned signal path
   Thus:
15 km divided by 2 = 7.5 km maximum distance between the subsidiary station and main station

The main benefit of this idea is the reduction of the time delay as the cell size constraint. This feature changes the economic analysis of the UTRAN TDD option by affecting the number of cells required per square kilometre in extending mobile telecom operator's capacity.

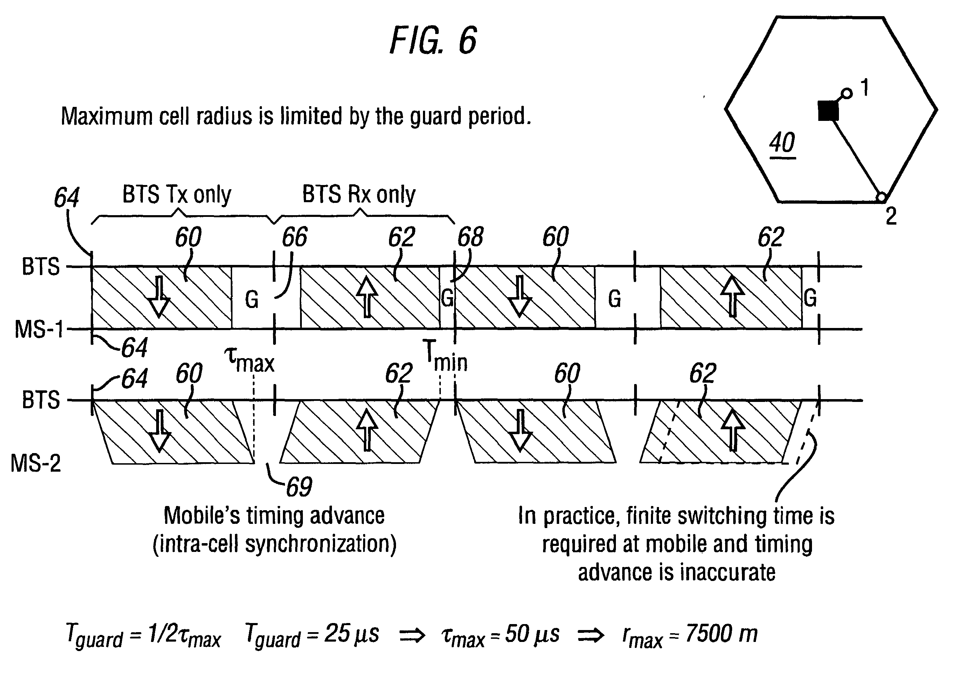

Referring now to **Figure 6**, this shows a timing diagram for operation of the invention in a preferred embodiment for a symmetric TDD structure in which downlink slots 60 and uplink slots 62 alternate with each other. The timing of the main station BTS is indicated in the upper line in a row, and the timing of the subsidiary station MS is indicated in the lower line of the row. The MS is synchronised at entry to the cell, and thereafter the main station BTS computes timing deviation signals 64 and transmits these at the beginning of each downlink burst . The station MS adjusts its timing in response to these signals. The guard period 68 in the main station between an uplink slot 62 and a next following downlink slot 60 is a minimal value, determined by practical constraints. The guard period 66 between a downlink slot and the next following uplink slot is twice the value of the prior art system, namely 192 CPS, less the value of period 68.

When the subsidiary station receives a downlink burst and a timing deviation signal 64, it adjusts its transmission of the next following uplink burst so that the uplink burst arrives at the correct timing for the uplink slot 62 at the BTS, i.e. at the end of guard period 66. Thus for MS very close in physical position to the BTS, position 1, there is no significant propagation delay, and there will be a time delay at the MS between the uplink burst and the next following downlink burst equal to the guard period of the BTS, 192 CPS (ignoring practical constraints), as shown in the upper diagram. However, at the extreme edge of the cell, position 2, there will be a significant timing deviation to advance the timing of the MS, and no significant time delay at the MS between a downlink burst and the next following uplink burst.
In an intermediate position as shown in Figure 6, there will be a certain amount of delay 69 between a downlink burst and the next following uplink burst.

The guard period is used at the main station for different things, such as computation of timing advance, power ramp-up and power ramp-down at the beginning and the end of timeslot. The maximum distance between main and subsidiary stations is not only defined by the guard period but also by the time needed to stop the previous time slot and the time to start the next one. The distance is defined by: guard period - (Time start + Time stop + lack of synchronisation accuracy). The lack of synchronisation accuracy time increment may be seen as a functional margin to preserve integrity of information.

With the arrangement, the cell size can be effectively doubled because the available guard period in two slots in the Node B is effectively assigned to the period between a downlink slot and the next following uplink slot.

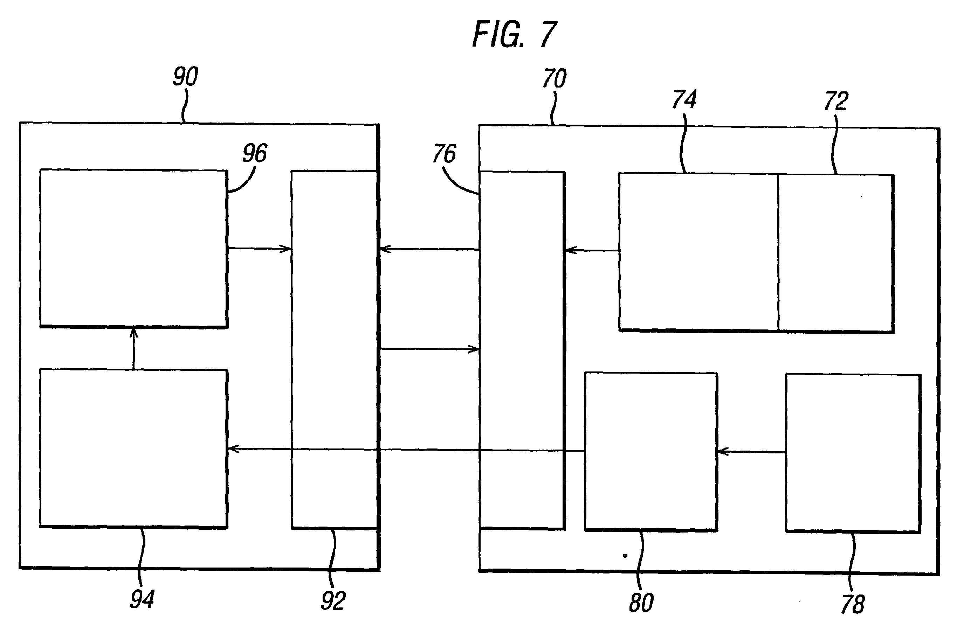

Referring now to **Figure 7,** this shows a conceptual block diagram of a Node B and a UE according to the invention. The Node B 70 has software 72 so that processor 74 can adjust the guard periods between downlink and uplink slots as indicated in **Figure 6**. In a modification, software 74 may be located in the associated RNC (Figure 1). Processor 74 controls transceiver 76. In addition, Node B 70 has a system clock reference 78 and a means 80 for computing timing deviation signals to transmit via transceiver 76 to the respective UE 90 at the beginning of a downlink time slot. The UE 90 has a transceiver 92, and a clock 94 which is responsive to the timing deviation signals. A processor 96 computes the time at which an uplink burst will be transmitted by transceiver 92 following a received downlink burst.

The example above in **Figure 6** is for a symmetric system. For an asymmetric system in which there may be for example a number of consecutive downlink slots, the guard period between consecutive downlink slots remains the same as in the existing systems, i.e. - 96 CPS. For a system with a number of consecutive uplink slots, the guard period is the same as existing systems between consecutive uplink slots at the Node B.

## Claims

1. A cellular telecommunications time division system, wherein a main station (70) for a cell provides a defined frame structure, wherein each frame comprises a plurality of timeslots (60, 62), each timeslot having at the end a guard period (66, 68), the main station having means (76) for transmitting data bursts within each time slot, and means (78, 80) for transmitting timing deviation signals to subsidiary stations within the cell,
each subsidiary station (90) within the cell of the main station having means (94, 96) for adjusting its timing to received timing deviation signals, for adjusting the timing of uplink transmission bursts, **characterised in that**:
the guard period (66) at the main station for a downlink slot followed by an adjacent uplink slot is longer than a guard period (68) for an uplink slot followed by an adjacent downlink slot, whereby the cell size may be extended.

2. Apparatus for a cellular telecommunications time division system, including a main station (70) for a cell including means (72, 74) providing a defined frame structure, wherein each frame comprises a plurality of timeslots (60, 62), each timeslot having at the end a guard period (66, 68), the main station including means (76) for transmitting data bursts within a time slot, and means (78, 80) for transmitting timing deviation signals to subsidiary stations within the cell,
at least one subsidiary station (90) within the cell of the main station having means (94, 96) for adjusting its timing to received timing deviation signals, for adjusting the timing of uplink transmission bursts, **characterized in that**
said means providing a defined frame structure is arranged to provide a guard period (66) at the main station for a downlink slot followed by an adjacent uplink slot which is longer than a guard period (68) for an uplink slot followed by an adjacent downlink slot, whereby the cell size may be extended.

3. A system according to claim 1 or apparatus according to claim 2, wherein the system is UMTS, and the main station is a Node B, and the subsidiary station is a UE.

4. A system or apparatus according to any preceding claim, wherein the sum of the aforesaid guard periods, divided by two, is generally equal to the value of the guard period specified in an existing telecommunications standard.

5. A system or apparatus according to any preceding claim, wherein said guard period between an uplink slot and a next following downlink slot is a minimal value, determined by practical timing constraints.

6. A system or apparatus according to any preceding claim, wherein the timing deviation signal transmitting means is arranged, at the beginning of each downlink burst, to transmit a timing deviation signal (38, 64).

7. A system or apparatus according to any preceding claim, wherein the subsidiary station includes means (94, 96) to determine the time for transmission of an uplink slot from the timing deviation signal provided by the main station, and the known length of a downlink burst.

8. A system or apparatus according to any preceding claim, wherein the system is symmetric, a time frame consisting of single downlink slots separated by single uplink slots.

9. A system or apparatus according to any of claims 1 to 7, wherein the system is asymmetric, a time frame consisting of an unequal number of downlink slots and uplink slots, wherein the excess of uplink or downlink slots each have an associated guard period equal to the sum of the aforesaid guard periods, divided by two.

10. A method of time division access in a cellular telecommunications system, wherein a main station (70) for a cell provides a defined frame structure, each frame comprises a plurality of timeslots (60, 62), each timeslot having at the end a guard period (66, 68), and the main station transmitting timing deviation signals (38, 64) to subsidiary stations within the cell,
each subsidiary station (90) within the cell adjusting its timing to received timing deviation signals, and adjusting the timing of uplink transmission bursts, and **characterised in that**
the main station defines the guard period (66) for a downlink slot followed by an adjacent uplink slot (68) to be longer than the guard period for an uplink slot followed by an adjacent downlink slot, whereby the cell size is extended.

11. A method according to claim 10, wherein the system is UMTS, and the main station is a Node B, and the subsidiary station is a UE.

12. A method according to claim 10 or 11, wherein the sum of the aforesaid guard periods, divided by two, is generally equal to the value of the guard period specified in an existing telecommunications standard.

13. A method according to any of claims 10 to 12, wherein said guard period between an uplink slot and a next following downlink slot is a minimal value, determined by practical timing constraints.

14. A method according to any of claims 10 to 13, wherein a timing deviation signal is transmitted at the beginning of each downlink slot.

15. A method according to any of claims 10 to 14, wherein the subsidiary station determines the time for transmission of an uplink slot from the timing deviation signal provided by the main station and the known period of a downlink signal burst.

16. A method according to any of claims 10 to 15, wherein the system is symmetric, a time frame consisting of single downlink slots separated by single uplink slots.

17. A method according to any of claims 10 to 15, wherein the system is asymmetric, a time frame consisting of an unequal number of downlink slots and uplink slots, wherein the excess of uplink or downlink slots each have an associated guard period equal to the sum of the aforesaid guard periods, divided by two.
